# EUROPÄISCHE PATENTSCHRIFT

(11) **EP 2 208 672 B1**
(45) Veröffentlichungstag und Bekanntmachung des Hinweises auf die Patenterteilung: **22.08.2012**
(21) Anmeldenummer: 10000273.2
(22) Anmeldetag: 13.01.2010
(51) Int. Cl.: B65B 5/06, B65B 43/46, B65B 65/00

(54) **Mehrspurige Verpackungsmaschine**
Multi-track packaging machine
Machine d'emballage à plusieurs voies

(30) Priorität: 16.01.2009 DE 102009004837
(43) Veröffentlichungstag der Anmeldung: 21.07.2010
(73) Patentinhaber: Multivac Sepp Haggenmüller GmbH & Co. KG, 87787 Wolfertschwenden (DE)
(72) Erfinder: von Sybel, Rudolf, 87471 Durach (DE)
(74) Vertreter: Grünecker, Kinkeldey, Stockmair & Schwanhäusser

(56) Entgegenhaltungen:
- EP-A1- 0 334 266
- EP-A1- 0 424 226
- EP-A1- 0 635 428
- EP-A1- 1 598 273
- WO-A1-2004/074106

## Beschreibung

Die vorliegende Erfindung bezieht sich auf eine Verpackungsmaschine mit einer Arbeitsstation und zumindest einem Greifer, der Packungsschalen von einem Zuführförderer in die Arbeitsstation und von der Arbeitsstation zu einem Abführförderer bewegt, wobei die Arbeitsstation mindestens zweispurig ausgeführt ist. Insbesondere bezieht sich die vorliegende Erfindung auf eine Schalenverschließ-, Kammer- oder Tiefziehmaschine.

Eine Verpackungsmaschine ist aus EP-0 334 266 A1 bekannt, die über einen Greifer verfügt. Diese Verpackungsmaschine hat eine Arbeitsstation und ein Greifersystem mit einem Greifer, der Packungen greift und lateral versetzt. Die Arbeitsstation der Verpackungsmaschine ist einspurig ausgelegt, d. h., die Packungsschalen durchlaufen die Verpackungsmaschinen nacheinander in nur einer Spur.

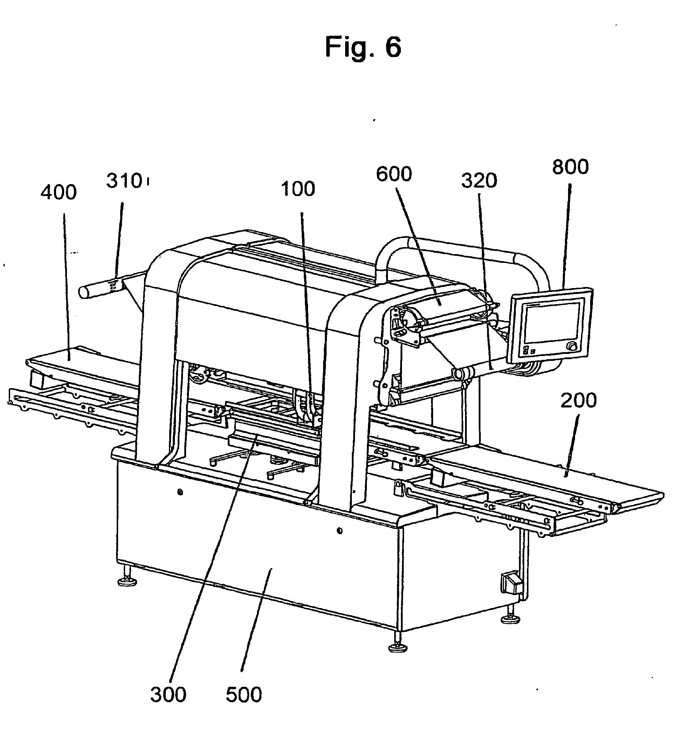

Eine weitere bekannte einspurige Verpackungsmaschine ist in der Fig. 6 gezeigt. Die Verpackungsmaschine hat die Gestalt eines Traysealers mit einem Zuführförderer 200, einer oder mehreren Arbeitsstationen 300, z. B. einer Evakuier-, Siegel- und Schneidstation, einem Abführförderer 400, einem Maschinengestell 500, einer Folienspannvorrichtung 600, einer Bedienvorrichtung 300, einer Folienzuführrolle 320, einem Folienrestaufwickler 310 und einem Greifersystem 2.

Auf dem Zuführförderer 200 bzw. dem Abführförderer 400 werden im Betrieb beispielsweise Packungsschalen in die Arbeitsstation 300 hinein bzw. aus ihr heraus transportiert. In der Arbeitsstation 300 werden die Packungen z. B. evakuiert, begast, versiegelt und geschnitten. Eine Oberfolie wird durch die Folienzuführrolle 320 zugeführt und durch die Folienspannvorrichtung 600 geführt. In der Arbeitsstation 300 wie z. B. der Siegelstation wird die Packungsschale mit der Oberfolie versiegelt. Der abgeschnittene Folienrest wird schließlich auf dem Folienrestaufwickler 310 aufgewickelt.

Die Übergabe der Packungen zwischen dem Zuführförderer 200, der Arbeitsstation 300 und dem Abführförderer 400 erfolgt durch Greifer 100. Die Greifer 100 greifen die Packungschalen, um sie von dem Zuführförderer 200 in die Arbeitsstation 300 und anschließend nach dem erfolgten Arbeitsprozess der Arbeitsstation 300 zu dem Abführförderer 400 zu befördern.

Die EP 0 424 226 A1 offenbart eine Verpackungsmaschine in Form einer Schalenverschließmaschine, bei der jeweils zwei Schalen parallel, d.h. zweispurig, in eine Siegelstation transportiert werden. Allerdings erfolgt der Transport hier nicht über Greifer, sondern über eine Transportkette, bei der quer zur Transportrichtung ausgerichtete Schubstangen die Verpackungsschalen befördern.

Die WO 2004/074106 A1 beschreibt eine Verpackungsmaschine in Form einer Tiefziehmaschine, bei der ebenfalls keine Greifer verwendet werden.

Einspurige Greifersysteme für Verpackungsmaschinen sind des Weiteren aus der EP 0 635 428 A1 oder der EP 1 598 273 A1 bekannt.

Es ist die Aufgabe der vorliegenden Erfindung, eine Verpackungsmaschine mit einer mindestens zweispurigen Arbeitsstation und einem entsprechenden Greifersystem vorzusehen.

Diese Aufgabe wird durch die Verpackungsmaschine mit den Merkmalen des Anspruchs 1 gelöst. Vorteilhafte Weiterbildungen sind Gegenstand der Unteransprüche.

In vorteilhafter Weise hat die Verpackungsmaschine einen ersten Greifer, der Packungsschalen von einem Zuführförderer in die Arbeitsstation bewegt, und einen zweiten Greifer, der die Packungsschalen aus der Arbeitsstation zu einem Abführförderer bewegt, was eine zweispurige Ausführung der Arbeitsstation erlaubt. Bei der mehrspurigen Arbeitsstation wird die Arbeitsstationen durch mehrere, nebeneinander angeordnete Packungsschalen durchlaufen, d.h. entlang einer Linie, die senkrecht zu der Vorschubrichtung der Arbeitsstation verläuft. Neben dem Begriff "Spur" wird der Begriff "Reihe" verwendet. Bei einer mehrreihigen Arbeitsstation wird die Arbeitsstation durch mehrere, hintereinander angeordnete Packungsschalen durchlaufen, d.h. entlang einer Linie, die parallel zu der Vorschubrichtung der Arbeitsstation verläuft. Die Anzahl der Reihen entspricht demnach der Anzahl der Packungsschalen in Vorschubrichtung pro Spur. Die vorliegende Erfindung hat ein Greifersystem, das in vorteilhafter Weise unabhängig von den Reihen und Spuren der Arbeitsstation ist.

Vorzugsweise haben der erste Greifer und der zweite Greifer pro Spur jeweils zwei Greifergabeln zum beidseitigen Greifen der Packungsschalen, eine Führungsvorrichtung zum Führen der Greifergabeln in bzw. aus der Arbeitsstation und eine erste Antriebsvorrichtung, wobei die erste Antriebsvorrichtung eine Kraft auf die Greifergabeln aufbringt, um die Greifergabeln entlang der Führungsvorrichtung in bzw. aus der Arbeitsstation zu bewegen. Weiter bevorzugt ist die Führungsvorrichtung des ersten Greifers in der Vorschubvorrichtung der Arbeitsstation vor der Arbeitsstation angeordnet, und die Führungsvorrichtung des zweiten Greifers ist in der Vorschubvorrichtung der Arbeitsstation hinter der Arbeitsstation angeordnet.

Weitere Merkmale und Vorteile der vorliegenden Erfindung werden aus der nachfolgenden Figurenbeschreibung ersichtlich.

Es zeigen:
- Fig. 1: eine schematische Seitenansicht eines Teils der Verpackungsmaschine gemäß einem ersten Ausführungsbeispiel der vorliegenden Erfindung;
- Fig. 2: eine schematische Draufsicht eines Teils der Verpackungsmaschine gemäß einem zweiten Ausführungsbeispiel der vorliegenden Erfindung;
- Fig. 3: eine schematische Draufsicht eines Teils der Verpackungsmaschine gemäß dem zweiten Ausführungsbeispiel der vorliegenden Erfindung;
- Fig. 4: eine schematische Draufsicht eines Teils der Verpackungsmaschine gemäß dem zweiten Ausführungsbeispiel der vorliegenden Erfindung;
- Fig. 5: eine schematische Querschnittansicht eines Teils der Verpackungsmaschine gemäß der vorliegenden Erfindung; und
- Fig. 6: eine schematische perspektivische Ansicht einer Schalenverschließmaschine gemäß dem Stand der Technik.

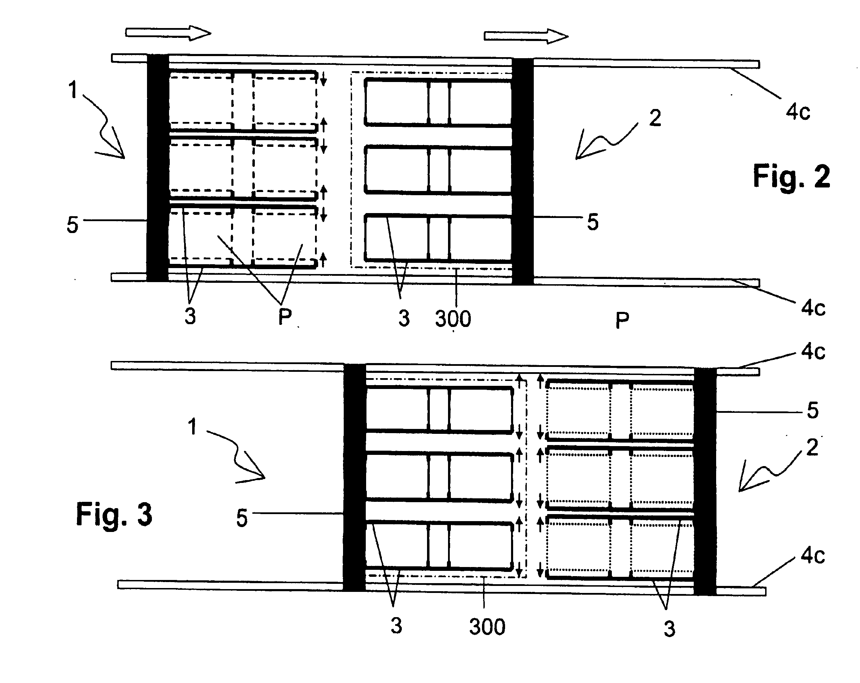

Im Folgenden werden mit Bezug auf die Figuren Ausführungsbeispiele der Erfindung beschrieben. Die Verpackungsmaschine gemäß der Erfindung kann eine Schalenverschlussmaschine, eine Kammermaschine oder eine Tiefziehmaschine sein. In den Figuren 2 bis 5 ist ersichtlich, dass die Arbeitsstation 300 mindestens zweispurig, d. h. in diesem Ausführungsbeispiel dreispurig ausgeführt ist. Bei der Verpackungsmaschine sollen eine Gruppe von Packungsschalen P (im dargestellten Ausführungsbeispiel sechs Packungsschalen P, d. h. drei Spuren mit wiederum zwei Packungsschalen P pro Spur) aus der Arbeitsstation 300 heraus genommen und gleichzeitig eine andere Gruppe (im dargestellten Ausführungsbeispiel wiederum sechs Packungsschalen P) hinein befördert werden. In der Arbeitsstation 300 wird die dort hineinbeförderte Packungsgruppe gleichzeitig verarbeitet.

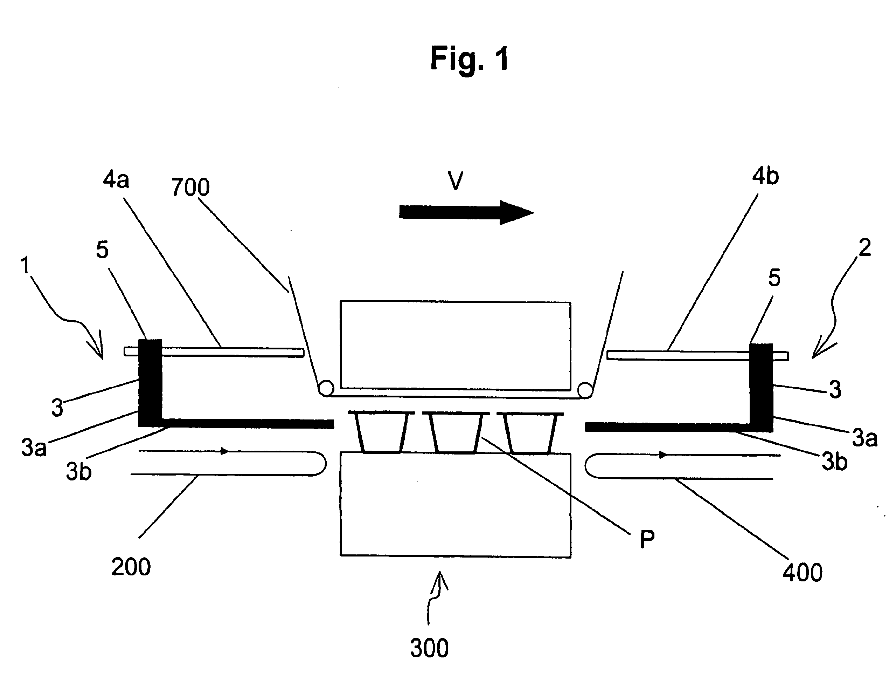

Der Fig. 1 zeigt einen Teil der Verpackungsmaschine mit der Arbeitsstation 300, die die Packungsschalen P mit einer Oberfolie 700 versiegelt, einem ersten Greifer 1, der die Packungsschalen P von einem Zuführförderer 200 in die Arbeitsstation 300 bewegt, und einem zweiten Greifer 2, der die Packungsschalen P aus der Arbeitsstation 300 zu einem Abführförderer 400 bewegt.

Die Figuren 1 bis 5 zeigen weiter, dass der erste Greifer 1 und der zweite Greifer 2 pro Spur jeweils zwei Greifergabeln 3 zum beidseitigen Greifen der Packungsschalen P und eine Führungsvorrichtung 4a, 4b; 4c zum Führen der Greifergabeln 3 in bzw. aus der Arbeitsstation 300 aufweisen. In den dargestellten Ausführungsbeispielen haben der erste Greifer 1 und der zweite Greifer 2 demnach jeweils sechs Greifergabeln 3. Auch wenn dies nicht in den Figuren dargestellt ist, haben der erste Greifer 1 und der zweite Greifer 2 jeweils eine erste Antriebsvorrichtung, die eine Kraft auf die Greifergabeln 3 aufbringt, um die Greifergabeln 3 entlang der Führungsvorrichtung 4a, 4b; 4c in bzw. aus der Arbeitsstation 300 zu bewegen.

In den gezeigten Ausführungsbeispielen hat die Führungsvorrichtung 4a, 4b; 4c jeweils zwei parallel angeordnete Wellen 4a, 4b; 4c und einen Schlitten 5, der die Greifergabeln 3 trägt und durch die erste Antriebsvorrichtung entlang den Wellen 4a, 4b; 4c gleitend bewegt wird. Der Schlitten 5 wiederum hat eine zweite Antriebsvorrichtung, die eine Greifbewegung der Greifergabeln 3 bewirkt. Die Greifergabeln 3 haben jeweils einen vertikalen Abschnitt 3a, der am oberen Ende an dem Schlitten gekoppelt 5 ist, und einen horizontalen Abschnitt 3b zum Greifen der Packungsschalen P. Der vertikale Abschnitt 3a und der horizontale Abschnitt 3b sind in der Seitenansicht im Wesentlichen L-förmig angeordnet. Fig. 1 zeigt die fliegende Lagerung der Greifergabeln 3, wobei die horizontalen Abschnitte 3b in die Arbeitsstation 300 hineinfahren, während sich die vertikalen Abschnitte 3a außerhalb der Arbeitsstation 300 entlang der Führungsvorrichtung 4a, 4b; 4c bewegen. In vorteilhafter Weise können je nach Art der verwendeten Packungsschalen P verschiedene Greifergabeln 3 an den Schlitten 5 angebracht werden, ohne dass die weiteren Komponenten des Greifersystems ausgetauscht werden müssen.

Die zweite Antriebsvorrichtung kann eine Schwenkbewegung der Greifergabeln 3 bewirken, wobei die vertikalen Abschnitte 3a der Greifergabeln 3 vorzugsweise durch Schrittmotoren oder Servomotoren geschwenkt werden, sodass die Greifergabeln 3 auf und zu klappen. Vorzugsweise haben die Greifergabeln 3 dann jeweils ein Parallelogrammgestänge (nicht gezeigt), das für eine gleich bleibende Orientierung der horizontalen Abschnitte 3b der Greifergabeln 3 während des Greifvorgangs sorgt.

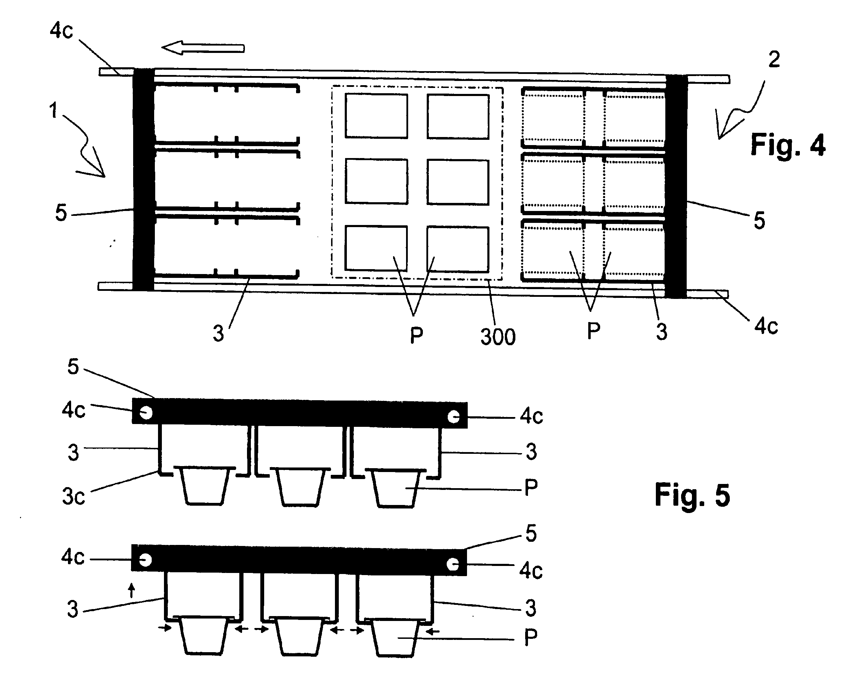

Die zweite Antriebsvorrichtung kann alternativ eine horizontale Verschiebung der Greifergabeln 3 senkrecht zur Vorschubrichtung V der Arbeitsstation 300 bewirken, wobei die vertikalen Abschnitte 3a der Greifergabeln 3 vorzugsweise durch Pneumatik- oder Hydraulikzylinder gemäß der Fig. 5 horizontal und senkrecht zur Vorschubrichtung V der Arbeitsstation 300 verschoben werden.

Die Führungsvorrichtung 4a des ersten Greifers 1 ist in der Vorschubrichtung V der Arbeitsstation 300 vor der Arbeitsstation 300 angeordnet, und die Führungsvorrichtung 4b des zweiten Greifers 2 ist in der Vorschubrichtung V der Arbeitsstation 300 hinter der Arbeitsstation 300 angeordnet Hierbei erstrecken sich die Verfahrwege des ersten Greifers 1 und des zweiten Greifers 2 vorzugsweise unterhalb der Folienzuführrolle 320 (Fig. 6) bzw. unterhalb des Folienrestaufwicklers 310 (Fig. 1), sodass die erfindungsgernälie Verpackungsmaschine wegen dem ersten und zweiten Greifer 1, 2 nicht notwendigerweise verlängert werden muss.

Im ersten Ausführungsbeispiel in der Fig. 1 ist gezeigt, dass der erste Greifer 1 und der zweite Greifer 2 voneinander unabhängige Führungsvorrichtungen 4a, 4b in Gestalt von getrennten Wellen 4a, 4b aufweisen. Im zweiten Ausführungsbeispiel in den Figuren 2 bis 5 ist gezeigt, dass der der erste Greifer 1 und der zweite Greifer 2 eine gemeinsame Führungsvorrichtung 4c in Gestalt von durchgehenden Wellen 4c aufweisen. Hierbei hat die Führungsvorrichtung 4c die Gestalt von zwei parallelen Wellen c, die sich kontinuierlich von dem ersten Greifer 1 zu dem zweiten Greifer 2 erstrecken.

Die erste Antriebsvorrichtung kann einen Riemenantrieb bestehend aus zwei Riemenscheiben und einem Riemen oder vorzugsweise einen Zahnriemenantrieb aufweisen, wobei der Greifer 1, 2 mit dem Riemen gekoppelt ist und eine der Riemenscheiben drehend angetrieben wird. Vorzugsweise ist der Riemenantrieb ein Zahnriemenantrieb, der eine genaue Vorschubbewegung ermöglicht. Der Schlitten 5 ist an dem Riemen (nicht dargestellt), und eine der Riemenscheiben wird durch einen nicht gezeigten Motor angetrieben.

Der Betrieb dieses Motors ist vorzugsweise an den Arbeitstakt der Verpackungsmaschine angepasst.

Die Antriebsvorrichtung muss aber nicht als Riemenantrieb ausgebildet sein. Alternativ kann auch ein beliebiger Linearantrieb verwendet werden, wie zum Beispiel ein Trapezgewindetrieb, ein Spindeltrieb, ein Linearmotor, ein elektromechanischer Zylinder (zum Beispiel ein Elektromotor mit Spindeltrieb), ein Pneumatikzylinder, ein Hydraulikzylinder, ein Zahnstangenantrieb oder ein Scotch-Yoke-Kurbeltrieb (Kurbelschlaufe). Als Spindeltrieb kann ein Kugelgewindetrieb (Kugelumlaufspindel), ein Rollengewindetrieb mit Rollenrückführung, ein Planetenrollengewindetrieb, ein Trapezgewindetrieb, ein Steilgewindetrieb, ein Kettentrieb oder ein hydrostatischer Gewindetrieb verwendet werden.

In der Fig. 5 ist gezeigt, dass der erste Greifer 1 und der zweite Greifer 2 die Packungsschalen P formschlüssig greifen. Die Greifergabeln 3 sind zu diesem Zweck mit einem horizontalen Ansatz 3c ausgebildet, der unter einen horizontalen Flansch der Packungsschalen P verfahren wird. In den Figuren 2 bis 4 ist gezeigt, dass die Greifergabeln 3 außerdem entsprechend der äußeren Kontur der Packungsschalen P geformt sind, sodass ein besonders sicherer Halt in den Greifergabeln 3 gewährleistet wird. Alternativ können der erste Greifer 1 und der zweite Greifer 2 die Packungsschalen P kraftschlüssig greifen, indem die Greifergabeln 3 so zueinander bewegt werden, dass sie gegen die dazwischenliegenden Packungsschalen P drücken.

Im unteren Teil der Fig. 5 ist außerdem durch einen vertikalen Pfeil gezeigt, dass die Greifer die Packungsschalen P beim Bewegen in bzw. aus der Arbeitsstation 300 anheben. Das Anheben der Packungsschalen P kann durch die Greifbewegung der Greifer selbst, durch separates Anheben der Greifer oder durch Anheben der Führungsvorrichtung bewirkt werden.

Der Betrieb des ersten Greifers 1 und des zweiten Greifers 2 ist folgendermaßen:

In der Ausgangssituation gemäß der Fig. 2 werden im ersten Schritt die sechs gesiegelten Packungsschalen P von dem zweiten Greifer 2 gegriffen und aus der Arbeitsstation 300 bewegt. Gleichzeitig werden andere sechs Packungsschalen P auf dem Zuführförderer 200 (Fig. 1) von dem ersten Greifer 1 durch dessen Greifbewegung gegriffen und in die Arbeitsstation 300 bewegt. Alternativ kann das Greifen der sechs neuen Packungsschalen P durch den ersten Greifer 1 bereits vorab geschehen sein.

Im zweiten Schritt gemäß der Fig. 3 werden die Packungsschalen P vom zweiten Greifer 2 auf den Abführförderer 400 (Fig. 1) abgelegt, und die noch zu versiegelnden Packungsschalen P werden vom ersten Greifer 1 in der Arbeitsstation 300 durch Öffnen der Greifergabeln 3 abgelegt. Vorzugsweise bewegen sich der erste Greifer 1 und der zweite Greifer 2 hierbei annähernd synchron.

Im dritten Schritt gemäß der Fig. 4 wird der erste Greifer 1 aus der Arbeitsstation 300 herausbewegt. Diese Bewegung des ersten Greifers 1 aus der Arbeitsstation 300 kann mit maximaler Beschleunigung und Geschwindigkeit durchgeführt werden, da der erste Greifer 1 nicht mit Packungsschalen P beladen ist. Anschließend können die sechs Packungsschalen P in der Arbeitsstation 300 versiegelt werden. In vorteilhafter Weise kann der Arbeitstakt der Verpackungsmaschine minimiert werden, wenn sich der erste Greifer 1 und der zweite Greifer 2 synchron bewegen und/oder wenn die Bewegung des ersten Greifers 1 aus der Arbeitsstation 300 ohne Packungsschalen P mit erhöhter Geschwindigkeit erfolgt.

Es kann genügen, dass die Greifer 1, 2 die Packungsschalen P form- oder kraftschlüssig greifen, ohne dass die Packungsschalen P angehoben werden. Bei Bewegen in die Arbeitsstation 300 könnte sich der Zuführforderer 200 dabei synchron mitbewegen.

Jeoch ist vorzuziehen, dass der erste Greifer 1 und der zweite Greifer 2 die Packungsschalen P beim Bewegen in bzw. aus der Arbeitsstation 300 anheben, wie dies in der Fig. 5 durch den vertikalen Pfeil dargestellt ist. Das Anheben kann durch die Greifbewegung der Greifer 1, 2 selbst, durch Anheben der Greifer 1,2 oder durch Anheben der Führungsvorrichtung erfolgen. Das Anheben durch die Greifbewegung der Greifer 1, 2 oder durch Anheben der Greifer 1, 2 hat den Vorteil, dass der erste Greifer 1 neue Packungsschalen P bereits aufnehmen und anheben kann, während der zweite Greifer 2 in die geöffnete Arbeitsstation 300 bewegt wird, um die gesiegelten Packungsschalen P herauszubewegen, wobei sich der zweite Greifer 2 dabei zuerst noch in der unteren Position befinden sollte.

Vorzugsweise bewegen der erste Greifer 1 und der zweite Greifer 2 die Packungsschalen P synchron in die Arbeitsstation 300 hinein und heraus. Dadurch kann Zeit gespart werden, da sich die Greifer 1,2 im Arbeitstakt der Verpackungsmaschine bewegen.

Bei diesem Ausführungsbeispiel ist die Verpackungsmaschine eine Schalenverschließmaschine, die in Fachkreisen als "Traysealer" bezeichnet wird. Die Erfindung ist aber nicht auf diese Art beschränkt. Vielmehr kann die Verpackungsmaschine beliebige Packungsarten produzieren, wie z. B. eine Kammermaschine oder eine Tiefziehmaschine.

Die Antriebsvorrichtungen können elektrisch, pneumatisch oder hydraulisch betätigt werden.

In den dargestellten Ausführungsbeispielen haben der erste Greifer 1 und der zweite Greifer 2 voneinander unabhängige Antriebsvorrichtungen. Alternativ können der erste Greifer 1 und der zweite Greifer 2 eine gemeinsame Antriebsvorrichtung und eine Kupplung (nicht gezeigt) aufweisen. Die Kupplung ist so gestaltet, dass die beiden Greifer 1, 2 gemeinsam bewegt werden, wenn beide Greifer 1, 2 mit Packungsschalen P beladen sind, wohingegen beide Greifer 1, 2 erst voneinander weg und anschließend wieder zueinander hin bewegt werden, wenn beide Greifer 1, 2 nicht mit Packungsschalen P beladen sind. Wenn der erste Greifer 1 und der zweite Greifer 2 die gemeinsame Antriebssvorrichtung verwenden, muss lediglich die Kupplung vorgesehen werden, wodurch die Kosten der Verpackungsmaschine nicht besonders stark erhöht werden.

In den dargestellten Ausführungsbeispielen führt jede Greifergabel 3 eine Greifbewegung durch. Alternativ kann eine Greifergabel 3 pro Spur starr sein, wobei die dazugehörige Greifergabel 3 die Greifbewegung durchführt und die Packungsschalen P gegen die starre Greifergabel 3 drückt.

Die Greifer 1, 2 müssen nicht notwendigerweise oberhalb der Transportebene angeordnet sein. Alternativ können die Greifer 1, 2 unterhalb der Transportebene angeordnet sein, wobei es die Packungsschalen P von unten greift.

Ferner ist eine Abwandlung möglich, bei der der Schlitten 5 an beiden Seiten nicht nur durch eine Welle 4a, 4b; 4c, sondern an beiden Seiten jeweils durch ein Wellenpaar (nicht gezeigt) geführt ist. Jedes Wellenpaar besteht jeweils aus zwei parallel angeordneten Wellen, die einen kreisrunden Querschnitt haben können. Der Schlitten 5 hat an beiden Seiten eine kreisrunde Durchgangsbohrung, in die ein entsprechend geformtes, zylindrisches Führungsstück drehbar eingefügt ist. Das Führungsstück hat wiederum zwei Durchgangsbohrungen, durch die das Wellenpaar hindurchtritt. Die erste Antriebsvorrichtung ist so gestaltet, dass eine Welle des Wellenpaars um die jeweils andere Welle des Wellenpaars orbitiert, sodass sich das zylindrische Führungsstück innerhalb der Durchgangsbohrung im Schlitten 5 dreht. Die Greifergabeln 3 sind mit dem zylindrischen Führungsstück verbunden und drehen sich dementsprechend auch.

Der Schutzumfang beschränkt sich nicht auf das dargestellte Ausführungsbeispiel, sondern er umfasst weitere Änderungen und Abwandlungen, sofern diese innerhalb des durch die beigefügten Ansprüche definierten Umfangs fallen.

## Patentansprüche

1. Verpackungsmaschine mit einer Arbeitsstation (300), einem ersten Greifer (1), der Packungsschalen (P) von einem Zuführförderer (200) in die Arbeitsstation (300) bewegt, und einem zweiten Greifer (2), der die Packungsschalen (P) aus der Arbeitsstation (300) zu einem Abführförderer (400) bewegt, wobei sowohl die Arbeitsstation (300), als auch die beiden Greifer (1, 2) mindestens zweispurig ausgeführt sind.

2. Verpackungsmaschine gemäß Anspruch 1, wobei
der erste Greifer (1) und/oder zweite Greifer (2) pro Spur jeweils zwei Greifergabeln (3) zum beidseitigen Greifen der Packungsschalen (P), eine Führungsvorrichtung (4a, 4b; 4c) zum Führen der Greifergabeln (3) in bzw. aus der Arbeitsstation (300) und eine erste Antriebsvorrichtung aufweisen, wobei
die erste Antriebsvorrichtung eine Kraft auf die Greifergabeln (3) aufbringt, um die Greifergabeln (3) entlang der Führungsvorrichtung (4a, 4b; 4c) in bzw. aus der Arbeitsstation (300) zu bewegen.

3. Verpackungsmaschine gemäß Anspruch 2, wobei
die Führungsvorrichtung (4a) des ersten Greifers (1) in der Vorschubrichtung (V) der Arbeitsstation (300) vor der Arbeitsstation (300) angeordnet ist und die Führungsvorrichtung (4b) des zweiten Greifers in der Vorschubrichtung (V) der Arbeitsstation (300) hinter der Arbeitsstation (300) angeordnet ist.

4. Verpackungsmaschine gemäß Anspruch 2 oder 3, wobei
der erste Greifer (1) und der zweite Greifer (2) voneinander unabhängige Führungsvorrichtungen (4a, 4b) und/oder voneinander unabhängige Antriebsvorrichtungen aufweisen.

5. Verpackungsmaschine gemäß Anspruch 2 oder 3, wobei
der erste Greifer (1) und der zweite Greifer (2) eine gemeinsame Führungsvorrichtung (4c) und/oder eine gemeinsame Antriebsvorrichtung aufweisen.

6. Verpackungsmaschine gemäß einem der vorherigen Ansprüche, wobei
der erste Greifer (1) und/oder der zweite Greifer (2) die Packungsschalen (P) formschlüssig oder kraftschlüssig greifen.

7. Verpackungsmaschine gemäß einem der vorherigen Ansprüche, wobei
der erste Greifer (1) und/oder der zweite Greifer (2) die Packungsschalen (P) beim Bewegen in bzw. aus der Arbeitsstation (300) anheben.

8. Verpackungsmaschine gemäß dem vorherigen Anspruch, wobei
das Anheben der Packungsschalen (P) durch eine Greifbewegung des ersten Greifers (1) bzw. des zweiten Greifers (2), durch Anheben des ersten Greifers (1) bzw. des zweiten Greifers (2) oder durch Anheben der Führungsvorrichtung (4a, 4b; 4c) bewirkt wird.

9. Verpackungsmaschine gemäß einem der vorherigen Ansprüche, wobei
der erste Greifer (1) und der zweite Greifer (2) die Packungsschalen (P) synchron in die Arbeitsstation (300) hinein und heraus bewegen.

10. Verpackungsmaschine gemäß einem der Ansprüche 2 bis 8, wobei
die Führungsvorrichtung (4a, 4b; 4c) mindestens zwei parallel angeordnete Wellen (4a, 4b; 4c) und einen Schlitten (5) aufweist, der die Greifergabeln (3) trägt und durch die erste Antriebsvorrichtung entlang den Wellen (4a, 4b; 4c) gleitend bewegt wird, und
der Schlitten (5) eine zweite Antriebsvorrichtung aufweist, die eine Greifbewegung der Greifergabel (3) bewirkt.

11. Verpackungsmaschine gemäß einem der vorherigen Ansprüche, wobei
Zuführförderer (200) und/oder der Abführförderer (300) mindestens.dreispurig ausgeführt ist.

12. Verpackungsmaschine gemäß einem der Ansprüche 2 bis 11, wobei
die erste Antriebsvorrichtung einen Riemenantrieb bestehend aus zwei Riemenscheiben und einem Riemen oder vorzugsweise einen Zahnriemenantrieb aufweist, wobei der Greifer (1, 2) mit dem Riemen gekoppelt ist und eine der Riemenscheiben drehend angetrieben wird.

13. Verpackungsmaschine gemäß einem der Ansprüche 2 bis 11, wobei
die erste Antriebsvorrichtung ein Linearantrieb ist, vorzugsweise ein Trapezgewindetrieb, ein Spindeltrieb, ein Linearmotor, ein elektromechanischer Zylinder, ein Pneumatikzylinder, ein Hydraulikzylinder, ein Zahnstangenantrieb, ein Kettentrieb oder ein Scotch-Yoke-Kurbeltrieb.

14. Verpackungsmaschine gemäß dem vorherigen Anspruch, wobei
die erste Antriebsvorrichtung ein Spindeltrieb ist, bei dem der Greifer (1, 2) mit einer Spindel im Eingriff ist und durch eine Drehung der Spindel vorgeschoben wird.

15. Verpackungsmaschine gemäß einem der vorherigen Ansprüche, wobei die Verpackungsmaschine entweder eine Schalenverschlussmaschine, eine Kammermaschine oder eine Tiefziehmaschine ist.

16. Verpackungsmaschine gemäß einem der vorangehenden Ansprüche, **dadurch gekennzeichnet, dass** sowohl die Arbeitsstation (300), als auch die beiden Greifer (1, 2) jeweils dreispurig ausgebildet sind.

## Claims

1. A packaging machine with a work station (300), a first gripper (1) which moves packaging trays (P) from a feed conveyor (200) into the work station (300), and with a second gripper (2) which moves the packaging trays (P) out of the work station (300) to a discharge conveyor (400), wherein both the work station (300) and the two grippers (1,2) are of at least two-track design.

2. A packaging machine according to Claim 1, wherein
the first gripper (1) and/or the second gripper (2) each has/have per track two gripper forks (3) for gripping the packaging trays (P) on both sides, a guide device (4a,4b;4c) for guiding the gripper forks (3) into or out of the work station (300), and a first drive device, wherein
the first drive device applies a force to the gripper forks (3) so as to move the gripper forks (3) along the guide device (4a,4b;4c) into or out of the work station (300).

3. A packaging machine according to Claim 2, wherein
the guide device (4a) of the first gripper (1) is arranged in the feed direction (V) of the work station (300) upstream of the work station (300) and the guide device (4b) of the second gripper is arranged in the feed direction (V) of the work station (300) downstream of the work station (300).

4. A packaging machine according to Claim 2 or 3, wherein
the first gripper (1) and the second gripper (2) have guide devices (4a,4b) which are independent of one another and/or drive devices which are independent of one another.

5. A packaging machine according to Claim 2 or 3, wherein
the first gripper (1) and the second gripper (2) have a common guide device (4c) and/or a common drive device.

6. A packaging machine according to any one of the preceding Claims, wherein
the first gripper (1) and/or the second gripper (2) grip the packaging trays (P) in a form-locking or force-locking manner.

7. A packaging machine according to any one of the preceding Claims, wherein
the first gripper (1) and/or the second gripper (2) raise the packaging trays (P) while moving into or out of the work station (300).

8. A packaging machine according to the preceding Claim, wherein
the raising of the packaging trays (P) is effected by a gripping movement of the first gripper (1) and/or of the second gripper (2), by raising the first gripper (1) and/or the second gripper (2) or by raising the guide device (4a,4b;4c).

9. A packaging machine according to any one of the preceding Claims, wherein
the first gripper (1) and the second gripper (2) move the packaging trays (P) in synchronism into and out of the work station (300).

10. A packaging machine according to any one of Claims 2 to 8, wherein
the guide device (4a,4b;4c) has at least two shafts (4a,4b;4c) arranged parallel and a slide (5) which carries the gripper forks (3) and is moved to slide along the shafts (4a,4b;4c) by the first drive device, and
the slide (5) has a second drive device which induces the gripping movement of the gripper fork (3).

11. A packaging machine according to any one of the preceding Claims, wherein
the feed conveyor (200) and/or the discharge conveyor (400) is of at least three-track design.

12. A packaging machine according to any one of Claims 2 to 11, wherein
the first drive device has a belt drive comprising two belt pulleys and one belt or preferably a toothed-belt drive, wherein the
gripper (1,2) is coupled to the belt and one of the belt pulleys is driven in rotating motion.

13. A packaging machine according to any one of Claims 2 to 11, wherein
the first drive device is a linear drive, preferably a trapezoidal thread drive, a spindle drive, a linear motor, an electromechanical cylinder, a pneumatic cylinder, a hydraulic cylinder, a rack gear, a chain drive or a Scotch yoke drive.

14. A packaging machine according to the preceding Claim,
wherein
the first drive device is a spindle drive, in which the gripper (1,2) is in engagement with a spindle and is advanced by rotation of the spindle.

15. A packaging machine according to any one of the preceding Claims, wherein
the packaging machine is either a tray-closing machine, a chambered machine or a deep-drawing machine.

16. A packaging machine according to any one of the preceding Claims, **characterised in that** both the work station (300) and the two grippers (1,2) are each of three-track design.

## Revendications

1. Machine d'emballage comportant une station de travail (300), un premier préhenseur (1) qui déplace des barquettes d'emballage (P) depuis un convoyeur d'alimentation (200) dans la station de travail (300), et un deuxième préhenseur (2) qui déplace les barquettes d'emballage (P) hors de la station de travail (300) sur un convoyeur de sortie (400), dans laquelle la station de travail (300) ainsi que les deux préhenseurs (1, 2) sont réalisés avec au moins deux voies.

2. Machine d'emballage selon la revendication 1, dans laquelle le premier préhenseur (1) et/ou le deuxième préhenseur (2) comportent chacun, pour chaque voie, deux fourches de préhension (3) pour saisir des deux côtés les barquettes d'emballage (P), un dispositif de guidage (4a, 4b ; 4c) pour guider les fourches de préhension (3) dans ou hors de la station de travail (300), et un premier dispositif d'entraînement, dans laquelle
le premier dispositif d'entraînement exerce une force sur la fourche de préhension (3) pour déplacer la fourche de préhension (3) le long du dispositif de guidage (4a, 4b ; 4c) dans ou hors de la station de travail (300).

3. Machine d'emballage selon la revendication 2, dans laquelle le dispositif de guidage (4a) du premier préhenseur (1) est agencé dans le direction d'alimentation (V) de la station de travail (300) avant la station de travail (300) et le dispositif de guidage (4b) du deuxième préhenseur est agencé dans le direction d'alimentation (V) de la station de travail (300) derrière la station de travail (300).

4. Machine d'emballage selon la revendication 2 ou 3, dans laquelle le premier préhenseur (1) et le deuxième préhenseur (2) comportent des dispositifs de guidage (4a, 4b) indépendants les uns des autres et/ou des dispositifs d'entraînement indépendants les uns des autres.

5. Machine d'emballage selon la revendication 2 ou 3, dans laquelle le premier préhenseur (1) et le deuxième préhenseur (2) comportent un dispositif de guidage commun (4c) et/ou un dispositif d'entraînement commun.

6. Machine d'emballage selon l'une des revendications précédentes, dans laquelle
le premier préhenseur (1) et/ou le deuxième préhenseur (2) saisissent les barquettes d'emballage (P) par engagement de formes ou par engagement de forces.

7. Machine d'emballage selon l'une des revendications précédentes, dans laquelle
le premier préhenseur (1) et/ou le deuxième préhenseur (2) soulèvent les barquettes d'emballage (P) lorsqu'ils les déplacent dans ou hors de la station de travail (300).

8. Machine d'emballage selon la revendication précédente, dans laquelle le soulèvement des barquettes d'emballage (P) est réalisé par un déplacement de préhension du premier préhenseur (1) ou du deuxième préhenseur (2), par levage du premier préhenseur (1) ou du deuxième préhenseur (2), ou par levage du dispositif de guidage (4a, 4b ; 4c).

9. Machine d'emballage selon l'une des revendications précédentes, dans laquelle
le premier préhenseur (1) et le deuxième préhenseur (2) déplacent les barquettes d'emballage (P) de manière synchrone dans ou hors de la station de travail (300).

10. Machine d'emballage selon l'une des revendications 2 à 8, dans laquelle le dispositif de guidage (4a, 4b ; 4c) comporte au moins deux axes agencés parallèlement (4a, 4b ; 4c) et un chariot (5) qui porte les fourches de préhension (3) et est déplacé de manière coulissante à travers le premier dispositif d'entraînement le long des axes (4a, 4b ; 4c), et
le chariot (5) comporte un deuxième dispositif d'entraînement qui réalise un déplacement de préhension de la fourche de préhension (3).

11. Machine d'emballage selon l'une des revendications précédentes, dans laquelle
le convoyeur d'alimentation (200) et/ou le convoyeur de sortie (300) sont réalisés avec au moins trois voies.

12. Machine d'emballage selon l'une des revendications 2 à 11, dans laquelle
le premier dispositif d'entraînement comporte un entraînement à courroie constitué de deux poulies et d'une courroie, ou préférablement d'un entraînement à courroie synchrone, moyennant quoi les préhenseurs (1, 2) sont accouplés à la courroie et entraînés en rotation par une des poulies.

13. Machine d'emballage selon l'une des revendications 2 à 11, dans laquelle
le premier dispositif d'entraînement est un entraînement linéaire, préférablement un entraînement à vis trapézoïdale, un entraînement à vis, un moteur linéaire, un vérin électromécanique, un vérin pneumatique, un vérin hydraulique, un entraînement à crémaillère, un entraînement à chaîne, ou un entraînement à manivelle et coulisse.

14. Machine d'emballage selon la revendication précédente, dans laquelle le premier dispositif d'entraînement est un entraînement à vis grâce auquel le préhenseur (1, 2) est en prise avec un axe et est déplacé vers l'avant par une rotation de l'axe.

15. Machine d'emballage selon l'une des revendications précédentes, dans laquelle
la machine d'emballage est soit une machine de fermeture de barquettes, une machine à chambre de scellement ou une machine d'emboutissage.

16. Machine d'emballage selon l'une des revendications précédentes, **caractérisée en ce que** la station de travail (300) ainsi que les deux préhenseurs (1, 2) sont tous réalisés avec trois voies.
